Europäisches Patentamt

European Patent Office

Office européen des brevets

(11) Veröffentlichungsnummer: **0 141 315**
**A1**

# (12) EUROPÄISCHE PATENTANMELDUNG

(21) Anmeldenummer: **84112281.5**

(22) Anmeldetag: **12.10.84**

(51) Int. Cl.⁴: **C 08 L 97/02**

(30) Priorität: **21.10.83 DE 3338268**

(43) Veröffentlichungstag der Anmeldung:
**15.05.85 Patentblatt 85/20**

(84) Benannte Vertragsstaaten:
**BE CH DE FR LI SE**

(71) Anmelder: **BASF Aktiengesellschaft
Carl-Bosch-Strasse 38
D-6700 Ludwigshafen(DE)**

(72) Erfinder: **Schmidt-Hellerau, Christof
Rheinrugenstrasse 45
D-6700 Ludwigshafen(DE)**

(54) Verfahren zur Herstellung von Spanplatten mit verbesserter elektrischer Leitfähigkeit sowie Spanplatten mit verbesserter elektrischer Leitfähigkeit.

(57) Verfahren zur Herstellung von Spanplatten mit verbesserter elektrischer Leitfähigkeit, wobei man bei der Herstellung der Spanplatten, entweder durch direkte Zugabe zu den beleimten Spänen vor ihrer Verpressung oder durch vorheriges Untermischen in Leimharz, 0,3 bis 5,0 Gew.%, bezogen auf absolut trockenes Holz, eines Farbruβes zusetzt sowie Spanplatte mit verbesserter elektrischer Leitfähigkeit.

EP 0 141 315 A1

Croydon Printing Company Ltd.

0141315

Verfahren zur Herstellung von Spanplatten mit verbesserter elektrischer Leitfähigkeit sowie Spanplatten mit verbesserter elektrischer Leitfähigkeit

Die vorliegende Erfindung betrifft ein neues Verfahren zur Herstellung von Spanplatten mit verbesserter elektrischer Leitfähigkeit durch Zusatz eines Farbrußes sowie Spanplatten, die eine verbesserte elektrische Leitfähigkeit aufweisen.

In den letzten Jahren entstand ein Bedarf an Plattenwerkstoffen, die eine gute elektrische Leitfähigkeit aufweisen sollen. Solche Werkstoffe werden z.B. als Arbeitsplatten bei der Herstellung von Mikro-Chips oder als Bodenplatten für Computerräume benötigt.

Um eine Verminderung des Oberflächenwiderstandes zu erreichen, verwendete man bisher beispielsweise beliebige Platten, die mit Blechen beschlagen sind; deren Herstellung ist aber sehr aufwendig.

Aus der Kunststoffherstellung ist bekannt, Ruß zur leitfähigen Ausrüstung von Kunststoffen zu verwenden (Ullmanns Enzyklopädie der technischen Chemie, 4. Auflage, Bd. 18, S. 598). Um hierbei günstige Leitfähigkeitseigenschaften zu erreichen, müssen hohe Anforderungen an die Verteilung des Rußes im Kunststoff gestellt werden. Weiterhin zeigt sich, daß dabei große Mengen an Ruß in den Kunststoff eingearbeitet werden müssen. Die durchschnittlichen Werte betragen etwa 10 bis 40 Gew.%, bezogen auf den Polymeranteil. In einigen Fällen werden sogar 70 Gew.%, bezogen auf den Polymeranteil, zugesetzt (Rubber, Chemistry and Technology 36, 1284f, (1963)).

Wie aus der Spanplattentechnologie allgemein bekannt, würde ein Zusatz von Hilfsmitteln in solchen Mengen zu völlig unbrauchbaren, weil keinerlei Festigkeit mehr aufweisenden, Platten führen.

Es wurde nun überraschenderweise gefunden, daß man Spanplatten mit verbesserter elektrischer Leitfähigkeit vorteilhaft erhält, wenn man bei der Herstellung der Spanplatten, entweder durch direkte Zugabe zu den beleimten Spänen vor ihrer Verpressung oder durch vorheriges Untermischen im Leimharz, 0,3 bis 5,0 Gew.%, vorzugsweise 0,5 bis 2,0 Gew.%, jeweils bezogen auf absolut trockenes Holz, eines Farbrußes zusetzt. (Im folgenden wird für den Begriff "absolut trocken" die gebräuchliche Abkürzung "atro" verwendet.)

Als Farbruße verwendet man die üblichen Farbrußarten, wie sie beispielsweise in Ullmanns Enzyklopädie der technischen Chemie, 4. Auflage, Bd. 14, S. 646 beschrieben sind. Vorzugsweise setzt man feinteilige Furnaceruße zu, die hochstrukturiert sind und nur einen geringen Gehalt an flüchtigen Bestandteilen aufweisen.

Rohstoffe für die Spanplatten sind, entsprechend dem Stand der Technik, beispielsweise Holzspäne von zerspanten Rund- und Knüppelhölzern, Sägewerks- und Furnierabfälle, Hobel- und Schälspäne sowie andere lignocellulosehaltige Rohmaterialien, z.B. Bagasse, Flachsschäben, Baumwollstengel, Jutestengel oder Kokosnußfasern.

Die Verleimung der Späne geschieht mit den bei der Spanplattenherstellung gebräuchlichen Leimharzen wie Harnstoff-Formaldehyd(UF)-Harzen, Melamin-Formaldehyd(MF)-Harzen, Melamin-Harnstoff-Formaldehyd(MUF)-Harzen, Phenol-Formaldehyd(PF)-Harzen, Melamin-Harnstoff-Phenol-Formaldehyd(MUPF)-Harzen, Harzen auf Isocyanatbasis oder deren Gemische.

Vorzugsweise erfolgt hier die Beleimung der Späne mit Harzen, die eine gute Kaltklebrigkeit aufweisen, wie UF- und MUPF-Harze oder deren Gemische. Insbesondere verwendet man dabei ein MUPF-Harz um ein möglichst hohes Niveau an Festigkeit und niedriger Quellung bei gleichzeitiger optimaler Haftung der Rußteilchen an den beleimten Spänen zu erreichen.

Die erfindungsgemäßen Spanplatten mit verbesserter elektrischer Leitfähigkeit enthalten in den Leimfugen 0,3 bis 5,0 Gew.%, vorzugsweise 0,5 bis 2,0 Gew.%, jeweils bezogen auf atro Holz, eines Farbrußes. Dabei spielt im Gegensatz zur leitfähigen Ausrüstung von Kunststoffen, bei denen die Leitfähigkeit entscheidend von der Verteilung der Rußteilchen im Kunststoff abhängt, im erfindungsgemäßen Verfahren der Zeitpunkt des Rußzusatzes, der die Verteilung der Rußteilchen wesentlich mitbeeinflußt, keine Rolle.

So kann der erfindungsgemäße Zusatz des Farbrußes entweder durch direkte Zugabe zu den beleimten Spänen vor ihrer Verpressung oder durch vorherige Untermischung im Leimharz erfolgen, wobei die direkte Zugabe zu den beleimten Spänen bevorzugt ist.

Beispielsweise werden die Mittel- und Deckschichtspäne mit einem MUPF-Harz beleimt. Dann läßt man entweder am Ende des Turbomischers, im Redler- oder Schneckentransportgang oder in der Schüttstation zu den stark beleimten und damit klebrigen Spänen den Farbruß rieseln.

Erstaunlicherweise liegt beim erfindungsgemäßen Verfahren die Menge des zugesetzten Farbrußes im Bereich von 0,3 bis 5,0 Gew.%, insbesondere 0,5 bis 2,0 Gew.%, jeweils bezogen auf atro Holz, während sie bei der leitfähigen Ausrüstung von Kunststoffen bekanntlich in der Größenordnung von bis zu 70 Gew.%, bezogen auf den Polymeranteil, liegt. Im vorliegenden Fall aber verschlechtert schon eine höhere Dosierung als 5,0 Gew.%, bezogen auf atro Holz, des Farbrußes die Festigkeit der erhaltenen Spanplatten.

Es hat sich gezeigt, daß optimale Leitfähigkeitswerte dann erhalten werden, wenn die Mittelschichtspäne wenigstens 10 Gew.% Staubanteile, das sind Anteile mit einer Maschenweite < 0,5 mm, aufweisen und wenn sie weiterhin mit maximal 10 Gew.% Leimharz, bezogen auf atro Holz, behandelt werden. Eine höhere Beleimung liefert schlechtere Leitfähigkeitswerte. Schließlich soll die Endfeuchtigkeit der Platte nach dem Verpressen beim Stapeln einen Wert von 8 Gew.%, bezogen auf atro Platte, nicht unterschreiten, da dadurch die Leitfähigkeitswerte ebenfalls vermindert werden. Dagegen erhöhen sie sich bei höherem Feuchtigkeitsgehalt.

Der Vorteil des erfindungsgemäßen Verfahrens liegt darin, daß es im Vergleich zu der eingangs beschriebenen herkömmlichen Methode zur Herstellung von Plattenwerkstoffen mit guter elektrischer Leitfähigkeit ohne weiteren Arbeitsaufwand direkt in jeder zur üblichen Herstellung von Spanplatten geeigneten Anlage erfolgen kann.

Dabei ist besonders überraschend, daß die Rußteilchen sehr fest in der ausgehärteten Platte haften. So trat z.B. nach einer zweistündigen Kochprüfung der erfindungsgemäßen Spanplatten keinerlei Verfärbung des Kochwassers auf.

Das nachfolgende Beispiel soll die Erfindung näher erläutern.

Beispiel

Für die Herstellung einer Spanplatte wurden folgende Leimflotten eingesetzt (Angabe in Gewichtsteilen):

|  | Deckschicht | Mittelschicht |
|---|---|---|
| Leimharz* | 100,0 | 100,0 |
| Emulsion 50 %ig | 6,1 | 5,0 |
| Härterlösung | 9,0 | 18,0 |
| Wasser | 9,6 | 5,0 |
| Festharz im Ansatz [Gew.%] | 50,5 | 49,2 |
| Festharz auf atro Späne [Gew.%] | 14,0 | 13,0 |

* Als Leimharz diente ein MUPF-Harz mit einem Trockengehalt von $63\pm1\%$, einer Dichte bei 20°C von ca. 1,27 bis 1,28 g/cm$^3$ und einer Viskosität von ca. 550 bis 700 mPa.s.

Auf die Späne wurde nach ihrer Beleimung der Farbruß gerieselt. Man verwendete einen Farbruß mit folgenden Eigenschaften:

BET-Oberfläche: 150 $m^2$/g, Primärteilchengröße: 23 nm, DBP-Adsorption (in ml/100 g): 120

Die beleimten und mit Farbruß vermischten Späne wurden dann in an sich bekannter Weise zu Spankuchen geschüttet und bei einer Temperatur von 175°C in einer Zeit von 10 min 40 sec zu 41 mm dicken Platten verpreßt.

Es ergaben sich folgende Resultate:

| Zugesetzter Farbruß [Gew.%] (bezogen auf atro Späne) | 0 | 1,0 | 2,0 |
|---|---|---|---|
| Spez. Durchgangswiderstand Ohm x cm* nach 20 h Lagerung NK 23/50 | $7 \times 10^{10}$ | $5 \times 10^4$ | $1 \times 10^3$ |
| Oberflächenwiderstand ($RO_E$) Ohm* nach 20 h Lagerung NK 23/50 | $10^{10}$ | $5 \times 10^3 - 1 \times 10^4$ | $1 \times 10^2$ |
| Dicke       mm  $\bar{x}$ | 39,7 | 39,7 | 39,7 |
| Dichte     kg/$m^3$  $\bar{x}$ | 669 | 669 | 670 |
| Biegefestigkeit N/$mm^2$  $\bar{x}$ | 17,6 | 17,2 | 16,1 |
| Querzugfestigkeit N/$mm^2$  $\bar{x}$ V 20 | 1,08 | 1,20 | 1,04 |
| Querzugfestigkeit N/$mm^2$  $\bar{x}$ V 100 | 0,43 | 0,44 | 0,41 |
| Quellung nach 2 h  %  $\bar{x}$ | 2,2 | 2,3 | 2,7 |
| Quellung nach 24 h  %  $\bar{x}$ | 5,4 | 5,5 | 5,8 |

* Die Verbesserung der Leitfähigkeit ergibt sich aus der Verminderung von spezifischem Durchgangswiderstand und Oberflächenwiderstand

Patentansprüche

1. Verfahren zur Herstellung von Spanplatten mit verbesserter elektrischer Leitfähigkeit, dadurch gekennzeichnet, daß man bei der Herstellung der Spanplatten, entweder durch direkte Zugabe zu den beleimten Spänen vor ihrer Verpressung oder durch vorheriges Untermischen im Leimharz, 0,3 bis 5,0 Gew.%, bezogen auf absolut trockenes Holz, eines Farbrußes zusetzt.

2. Verfahren gemäß Anspruch 1, dadurch gekennzeichnet, daß man den Farbruß durch direkte Zugabe zu den beleimten Spänen vor ihrer Verpressung zusetzt.

3. Verfahren gemäß Anspruch 1, dadurch gekennzeichnet, daß man als Leimharz ein Harnstoff-Formaldehyd-Harz und/oder ein Melamin-Harnstoff-Phenol-Formaldehyd-Harz verwendet.

4. Verfahren gemäß Anspruch 1, dadurch gekennzeichnet, daß man 0,5 bis 2,0 Gew.%, bezogen auf absolut trockenes Holz, eines Farbrußes zusetzt.

5. Spanplatten mit verbesserter elektrischer Leitfähigkeit, enthaltend in den Leimfugen 0,3 bis 5,0 Gew.%, bezogen auf absolut trockenes Holz, eines Farbrußes.

351/83 Kg/HB    20.10.83

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | FR-A- 792 114 (LE BOIS BAKELISE) <br> * Zusammenfassung * | 1,5 | C 08 L 97/02 |
| A | PIGMENT HANDBOOK, PROPERTIES AND ECONOMICS, Band 1, 1973, Seiten 729-731, John Wiley & Sons, New York, US; <br> * Seite 729, Spalte 1, Abschnitte 3,4; Seite 729, Spalte 2, letzter Abschnitt - Seite 730, Spalte 1, Abschnitte 2,3; Seite 731, Spalte 1, Abschnitt 3 - Seite 731, Spalte 2, Abschnitt 2 * | 1 | |
| A | FR-A-1 225 087 (S.A. CARMETALL) <br> * Seite 1, Spalte 1 * | 1,5 | |
| A | DE-A-3 014 777 (FUNDER AG) <br> * Ansprüche * | 1,5 | RECHERCHIERTE SACHGEBIETE (Int. Cl 4) <br><br> C 08 L <br> B 27 N |

Der vorliegende Recherchenbericht wurde für alle Patentansprüche erstellt.

| Recherchenort | Abschlußdatum der Recherche | Prüfer |
|---|---|---|
| DEN HAAG | 06-02-1985 | VANHECKE H. |